(19) Europäisches Patentamt
European Patent Office
Office européen des brevets

(11) **EP 4 019 579 A1**

(12) **EUROPEAN PATENT APPLICATION**
published in accordance with Art. 153(4) EPC

(43) Date of publication:
**29.06.2022 Bulletin 2022/26**

(21) Application number: **20855708.2**

(22) Date of filing: **27.07.2020**

(51) International Patent Classification (IPC):
***C08K 5/103*** (2006.01)   ***C08L 67/02*** (2006.01)

(52) Cooperative Patent Classification (CPC):
**C08K 5/103; C08L 67/02**

(86) International application number:
**PCT/JP2020/028770**

(87) International publication number:
**WO 2021/033495 (25.02.2021 Gazette 2021/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.08.2019 JP 2019150036**

(71) Applicant: **Tohei Tsusho Co., Ltd.
Osaka-shi, Osaka 530-0041 (JP)**

(72) Inventors:
• **ONO, Masayuki
Osaka-shi, Osaka 530-0041 (JP)**
• **TATSUMI, Shigeo
Osaka-shi, Osaka 530-0041 (JP)**
• **TADOKORO, Takumi
Osaka-shi, Osaka 530-0041 (JP)**

(74) Representative: **Hutchins, Michael Richard et al
Schlich
9 St Catherine's Road
Littlehampton, West Sussex BN17 5HS (GB)**

(54) **POLYESTER RESIN COMPOSITION**

(57)    The polyester resin composition of the present invention contains a polyethylene terephthalate resin (A) and a deflection temperature modifier (B). The polyethylene terephthalate resin (A) is crystallizable, and when the polyethylene terephthalate resin is in a crystallized state, the polyester resin composition has a minimum tensile strength of 5 MPa or less in a temperature range of 150°C to 220°C, and has a tensile elongation of 50% or more in this temperature range.

EP 4 019 579 A1

**Description**

Technical Field

The present invention relates to a polyester resin composition, and more particularly to a polyester resin composition that can provide thermoformed resin articles usable at high temperatures.

Background Art

Conventionally, containers for foods sold in convenience stores and the like are produced by thermoforming a thermoplastic resin sheet made of polyethylene terephthalate (PET), polypropylene (PP), or the like into the shape of a tray or a cup using a vacuum forming machine or the like.

PET for use in the production of such containers is in an amorphous state and thus is also called A-PET (amorphous PET). Since A-PET is substantially entirely in an uncrystallized state, A-PET can exhibit heat resistance only up to a temperature at which amorphous portions exhibit glass transition. A-PET has a low glass transition temperature of about 70°C and generally has poor heat resistance. This largely limits the scope of practical use of A-PET in the field of, for example, heat-resistant containers including those subjected to heating in microwave ovens.

On the other hand, crystallized PET is called C-PET. C-PET can be produced typically through crystallization at the time of thermoforming PET, and thus can have improved heat resistance as compared with PET before being crystallized. From this viewpoint, there have been various studies including those aiming at improving the formability by using C-PET (see Patent Documents 1 and 2, for example).

However, according to these techniques, spherulites generated and grown during a thermoforming process impair the transparency of a formed article. In addition, it is necessary to heat a mold to around 150°C to 170°C for causing crystallization. To this end, special equipment that can heat the mold to a high temperature and also can perform cooling thereafter is required. Furthermore, it has been pointed out that, according to these techniques, since the contact between a resin sheet and the mold is solid-to-solid contact and this causes uneven heating, the crystallized state of the sheet becomes uneven, resulting in unstable heat resistance.

Patent Document 3 discloses heat-stretching a polyester sheet in the longitudinal direction and the transverse direction to accelerate the orientation and crystallization of molecular chains, thereby obtaining the sheet having both transparency and heat resistance. However, there is a concern that, in such a sheet, residual strain generated by the stretching causes thermal shrinkage during thermoforming processing, whereby the formability of the sheet is significantly deteriorated. Moreover, while conventional crystallized sheets can have improved heat resistance, they cannot be thermoformed unless they are heated to a temperature equal to or higher than the melting point. This lowers the crystallinity after all, which makes it impossible to provide a formed article having satisfactory heat resistance.

Patent Document 4 discloses a laminated biaxially oriented polyester film including a layer made of polyethylene terephthalate (thermoplastic resin A) and a layer made of polybutylene terephthalate

(thermoplastic resin B). This film has good rigidity and good dimensional stability, and can be formed by various methods including vacuum forming, vacuum pressure forming, plug assist vacuum pressure forming, press forming, and in-mold forming. However, this film has an average thickness of 12 nm or less, and besides, the total number of the laminated layers needs to be at least 1001. In this respect, this film is not considered suitable from the viewpoint of productivity.

Related Art Documents

Patent Documents

   Patet Document 1: Japanese Patent Laid-Open Publication No. 2005-194331
   Patent Document 2: Japansese Patent No. 4614044
   Patent Document 3: Japanese Patent Laid-Open Publication No. 2012-245700
   Patent Document 4: Japanese Patent No. 5105459

Summary of the Invention

Problem to be Solved by the Invention

The present invention aims to solve the above-described problems, and it is an object of the present invention to provide a polyester resin composition with which a thermoformed article excellent in formability and heat resistance can be obtained without the burden of providing additional equipment or the like.

Means for Solving the Problem

The present invention is a polyester resin composition comprising:

a polyethylene terephthalate resin (A); and
a deflection temperature modifier (B),
wherein the polyethylene terephthalate resin (A) is crystallizable, and when the polyethylene terephthalate resin is in a crystallized state, the polyester resin composition has a minimum tensile strength of 5 MPa or less in a temperature range of 150°C to 220°C, and has a tensile elongation of 50% or more in this temperature range.

In one embodiment, when the polyethylene terephthalate resin (A) is in a crystallized state, the polyethylene terephthalate resin (A) contained in the polyester resin composition has a crystallinity of 10% or more as measured with a differential scanning calorimeter.

In one embodiment, the deflection temperature modifier (B) is a copolyester resin containing: 80 mol% to 99 mol% of a terephthalic acid structural unit and 1 mol% to 20 mol% of an isophthalic acid structural unit; and an ethylene glycol structural unit.

In one embodiment, the deflection temperature modifier (B) is an amorphous polyester resin.

In one embodiment, the deflection temperature modifier (B) is a crystalline polyester resin having a melting point in a temperature range of 150°C to 220°C.

In one embobiment, the polyethylene terephthalate resin (A) is a copolyester resin containing: 90 mol% to 99 mol% of a terephthalic acid structural unit and 1 mol% to 10 mol% of an isophthalic acid structural unit; and an ethylene glycol structural unit.

In one embodiment, a content of the deflection temperature modifier (B) is 5 parts by weight to 30 parts by weight with respect to 100 parts by weight of the polyethylene terephthalate resin (A).

In one embodiment, the polyester resin composition further comprises at least one plasticizer selected from the group consisting of acetylated monoglycerides, propylene glycol fatty acid esters, fatty acid triglycerides, and sorbitan fatty acid esters.

The present invention is a method of producing a polyester resin formed body, which comproses:

(1) obtaining a supercooled sheet by extruding a melt of the polyester resin composition according to any one of claims 1 to 8 from a die and cooling the melt to a temperature lower than a cooling glass transition temperature (Tg) of the polyester resin composition;
(2) obtaining a solid-phase crystallized sheet by heating the supercooled sheet to a temperature between an extrapolated glass transition initiation temperature and an extrapolated glass transition end temperature of the polyester resin composition inclusive; and
(3) heating the solid-phase crystallized sheet to a temperature from 150°C to 220°C and then shaping and cooling the solid-phase crystallized sheet in a mold set at a temperature lower than the cooling glass transition temperature (Tg) of the polyester resin composition.

Effects of the Invention

The present invention can provide a formed body that is excellent in formability and heat resistance. Furthermore, the polyester resin composition of the present invention can be softened in a suitable temperature range and processed by forming while maintaining a high crystallinity, which, in other words, heat resistance. According to the present invention, no special equipment is required for the production of such formed bodies, and equipment used in the field of conventional resin forming can be used without making any modification thereto.

Specific Description of the Invention

The present invention will be described in detail below.

Polyester Resin Composition

The polyester resin composition of the present invention contains a polyethylene terephthalate resin (A) and a deflection temperature modifier (B).

Polyethylene Terephthalate Resin (A)

The polyethylene terephthalate resin (A) is composed of a dicarboxylic acid structural unit including a terephthalic component unit and a dihydroxy structural unit including an ethylene glycol component unit.

Such a polyethylene terephthalate resin (A) is produced using, for example, terephthalic acid and ethylene glycol as main raw materials. In the polyethylene terephthalate resin (A), 1 mol% or less of a dicarboxylic acid (a1) other than terephthalic acid and/or a dihydroxy compound (b1) other than ethylene glycol may be copolymerized.

Examples of the dicarboxylic acid (a1) other than terephthalic acid include: aromatic dicarboxylic acids such as phthalic acid, isophthalic acid, naphthalene dicarboxylic acid, diphenyl dicarboxylic acid, and diphenoxyethane dicarboxylic acid; aliphatic dicarboxylic acids such as adipic acid, sebacic acid, azelaic acid, and decanedicarboxylic acid; and alicyclic dicarboxylic acids such as cyclohexanedicarboxylic acid, cyclopropanedicarboxylic acid, and hexahydroterephthalic acid.

Examples of the dihydroxy compound (b1) other than ethylene glycol include: aliphatic glycols such as trimethylene glycol, propylene glycol, tetramethylene glycol, neopentyl glycol, hexamethylene glycol, and dodecamethylene glycol; alicyclic glycols such as cyclohexanedimethanol; bisphenols; and aromatic diols such as hydroquinone and 2,2-bis(4-$\beta$-hydroxyethoxyphenyl)propane.

The polyethylene terephthalate resin (A) may contain a structural unit derived from a multifunctional compound such as trimesic acid, trimethylolethane, trimethylolpropane, trimethylolmethane, or pentaerythritol. The content of the multifunctional compound in the polyethylene terephthalate resin (A) is not necessarily limited, and is, for example, 1 mol% or less.

Further, the polyethylene terephthalate resin (A) may contain, for example, a structural unit derived from a monofunctional compound such as benzoylbenzoic acid, diphenyl sulfone monocarboxylic acid, stearic acid, or methoxypolyethylene glycol. The content of the monofunctional compound in the polyethylene terephthalate resin (A) is not necessarily limited, and is, for example, 1 mol% or less.

Such a polyethylene terephthalate resin (A) is crystallizable, and can form a linear polyester by forming ester bonds composed of either ethylene terephthalate component units alone or randomly arranged ethylene terephthalate component units and dioxyethylene terephthalate component units.

The crystallinity of the polyethylene terephthalate resin (A) as measured using a differential scanning calorimeter (DSC) is preferably 10% or more and more preferably 20% or more. The polyethylene terephthalate resin (A) having a crystallinity of less than 10% as measured using the DSC causes thermal deformation when exposed to a temperature higher than the glass transition temperature, because softening of the polyethylene terephthalate resin (A) resulting from the transition of amorphous portions into a rubbery state outweighs the retention force of crystalline portions. In other words, the polyethylene terephthalate resin (A) has low heat resistance, and may exhibit heat resistance only up to a temperature around the glass transition temperature.

As the polyethylene terephthalate resin (A), it is preferable to use one whose limiting viscosity [$\eta$] as measured at 25°C in o-chlorophenol and/or melting point each fall within a predetermined range. The limiting viscosity [$\eta$] of the polyethylene terephthalate resin (A) in the present invention is preferably 0.5 dl/g to 1.5 dl/g and more preferably 0.6 dl/g to 1.2 dl/g. When the limiting viscosity [$\eta$] of the polyethylene terephthalate resin (A) is in such a range, the polyethylene terephthalate resin (A) can exhibit sufficient strength and the like while having sufficient plasticity. The melting point of the polyethylene terephthalate resin (A) in the present invention is preferably 230°C to 265°C and more preferably 230°C to 260°C. When the melting point of the polyethylene terephthalate resin (A) is in such a range, the polyethylene terephthalate resin (A) can maintain a molecular weight required for exhibiting sufficient strength and the like while having sufficient plasticity.

Further, in the present invention, it is preferable that the polyethylene terephthalate resin (A) contain a terephthalic acid structural unit and an isophthalic acid structural unit and also contain an ethylene glycol structural unit. Furthermore, in the polyethylene terephthalate resin (A), 100 mol% of the dicarboxylic acid component is composed of: preferably 90 mol% to 99 mol% and more preferably 95 mol% to 99 mol% of the terephthalic acid structural unit; and preferably 1 mol% to 10 mol% and more preferably 1 mol% to 5 mol% of the isophthalic acid structural unit. With the terephthalic acid structural unit and the isophthalic acid structural unit being contained in the above-described proportions, the polyethylene terephthalate resin (A) can develop crystallinity.

Deflection Temperature Modifier (B)

In the polyester resin composition of the present invention, the deflection temperature modifier (B) acts on the above-described polyethylene terephthalate resin (A) so as to cause the polyethylene terephthalate resin (A) to soften in a predetermined temperature range even when the polyethylene terephthalate resin (A) is in a crystallized state, thereby softening the polyester resin composition as a whole to cause deflection. Thus, the deflection temperature modifier (B) can serve as an auxiliary agent for imparting forming processability to the polyester resin composition.

Examples of the deflection temperature modifier (B) include: (1) a copolyester resin containing: 80 mol% to 99 mol% of a terephthalic acid structural unit and 1 mol% to 20 mol% of an isophthalic acid structural unit; and an ethylene glycol structural unit; (2) an amorphous polyester resin; (3) a crystalline polyester resin having a melting point in a temperature range of 150°C to 220°C; and (4) any combination of (1) to (3).

Copolyester Resin (1)

The copolyester resin (1) capable of serving as the deflection temperature modifier (B), containing: 80 mol% to 99 mol% of a terephthalic acid structural unit and 1 mol% to 20 mol% of an isophthalic acid structural unit; and an ethylene glycol structural unit (in the present specification, this may also be referred to simply as "copolyester resin (1)") is a copolymer obtained through a co-condensation reaction between dicarboxylic acids including terephthalic acid and isophthalic acid and a dihydroxy compound including ethylene glycol.

In 100 mol% of the dicarboxylic acid components constituting this copolymer, the amount of the terephthalic acid component is preferably 80 mol% to 99 mol% and more preferably 80 mol% to 90 mol%, and the amount of the isophthalic acid component is preferably 1 mol% to 20 mol% and more preferably 10 mol% to 20 mol%.

The copolyester resin (1) may further contain, as a structural unit thereof, a dicarboxylic acid (a2) as another dicarboxylic acid to be used in addition to the above-described terephthalic acid and isophthalic acid to the extent that the properties of the resulting copolyester resin (1) are not impaired. The content of the additional dicarboxylic acid (a2) as the structural unit in the copolyester resin (1) is not necessarily limited, and is, for example, 1 mol% or less, preferably 0.1 mol% to 0.8 mol%, and more preferably 0.2 mol% to 0.7 mol%. The additional dicarboxylic acid (a2) may be, for example, phthalic acid, 2-methylterephthalic acid, or 2,6-naphthalenedicarboxylic acid.

The copolyester resin (1) may further contain, as a structural unit thereof, a dihydroxy compound (b2) as another dihydroxy compound to be used in addition to the ethylene glycol to the extent that the properties of the resulting copolyester resin (1) are not impaired. The content of the additional dihydroxy compound (b2) as the structural unit in the copolyester resin (1) is not necessarily limited, and is, for example, 1 mol% or less, preferably 0.1 mol% to 0.8 mol%, and more preferably 0.2 mol% to 0.7 mol%. The additional dihydroxy compound (b2) may be, for example, a dihydroxy compound having 3 to 15 carbon atoms. Specific examples of the dihydroxy compound having 3 to 15 carbon atoms include 1,3-propanediol, neopentyl glycol, cyclohexanediol, cyclohexanedimethanol, 1,3-bis(2-hydroxyethoxy)benzene, 1,4-bis(2-hydroxyethoxy)benzene, 2,2-bis(4-6-hydroxyethoxyphenyl)propane, and bis(4-B-hydroxyethoxyphenyl)sulfone.

The limiting viscosity [η] of the copolyester resin (1) as measured at 25°C in o-chlorophenol is preferably in the range of 0.5 dl/g to 1.5 dl/g and more preferably in the range of 0.6 dl/g to 1.2 dl/g. By using the copolyester resin (1) having a limiting viscosity [η] in such a range as the deflection temperature modifier (B), the resulting polyester resin composition has excellent mechanical strength and excellent formability and thus can provide a favorable formed article.

The copolyester resin (1) can be produced according to known polycondensation methods such as those applicable to the production of the above-described polyethylene terephthalate resin (A). In the production of the copolyester resin (1), a dicarboxylic acid may be supplied to a reaction system either in the form of the dicarboxylic acid itself or as a diol ester of the dicarboxylic acid. On the other hand, ethylene glycol as a dihydroxy compound may be supplied in the form of the ethylene glycol, or may be supplied to a reaction system in the form of a dihydroxy ester of a dicarboxylic acid.

As a catalyst employed in the production of the copolyester resin (1), known co-condensation catalysts for use in the production of polyethylene terephthalate resins can be used. Examples of these catalysts include metals such as antimony, germanium, and titanium, and metal compounds thereof. Examples of the metal compounds include oxides, hydroxides, halides, inorganic acid salts, organic acid salts, complex salts, double salts, alcoholates, and phenolates. In the production of the copolyester resin (1), one type of co-condensation catalyst may be used, or two or more types of them may be used in combination. The co-condensation catalyst may be supplied to a reaction system from an initial stage of esterification or transesterification, or may be supplied to a reaction system prior to transition into the stage of a polycondensation reaction.

In the production of the copolyester resin (1), various additives such as a transesterification catalyst for use in the production of a polyethylene terephthalate resin, an inhibitor for inhibiting generation of diethylene glycol, a thermostabilizer, a photostabilizer, a lubricant, a pigment, and a dye may be added during the above-described co-condensation.

Examples of the transesterification catalyst include metal compounds of calcium, magnesium, lithium, zinc, cobalt, manganese, and the like. Examples of the form of these metal compounds include oxides, hydroxides, halides, inorganic acid salts, and organic acid salts. Examples of the inhibitor for inhibiting generation of diethylene glycol include amines such as triethylamine and tri-n-butylamine and quaternary ammonium compounds such as tetraethylammonium hydroxide and tetrabutylammonium hydroxide. Examples of the thermostabilizer include phosphoric acid compounds such as phosphoric acid, phosphorous acid, hypophosphorous acid, and esters thereof.

The copolyester resin (1) can be produced by a known melt polycondensation method or by using a known melt polycondensation method and a known solid-state polycondensation method one after another.

The melt polycondensation method may be either a direct polycondensation method or a transesterification polycondensation method. The melt polycondensation method may be performed by, for example, causing esterification or transesterification of the above-described dicarboxylic acid or a derivative thereof and glycol or a derivative thereof at the same time or sequentially preferably at a temperature of 100°C to 280°C to form an initial polycondensate thereof, and subsequently, stirring the initial polycondensate at a temperature equal to or lower than the melting point thereof, preferably at a temperature of 200°C to 300°C, in, for example, a vacuum or an inert gas flow to cause polycondensation.

Alternatively, the copolyester resin (1) can also be produced by obtaining a copolyester according to the above-described melt polycondensation method and then further increasing the molecular weight thereof through a solid-state polycondensation method. Such a solid-state polycondensation method may be performed by, for example, granulating a copolyester obtained through a melt polycondensation method and then maintaining the thus-obtained granular copolyester at a temperature equal to or lower than the melting point thereof, preferably at a temperature of 180°C to 240°C in, for example, a vacuum or an inert gas flow.

Amorphous Polyester Resin (2)

The amorphous polyester resin capable of serving as the deflection temperature modifier (B) (this may also be referred to simply as "amorphous polyester resin (2)" in the present specification) is an amorphous polyester composed of a dicarboxylic acid and a diol.

In general, a polyester composed only of terephthalic acid and ethylene glycol, such as a polyethylene terephthalate resin, develops crystallinity. Accordingly, when a dicarboxylic acid (a3) other than terephthalic acid is contained as a structural unit, the crystallinity can be inhibited and the resulting resin can be amorphous. The amorphous polyester resin (2) is, for example, composed of such a polyester. The amorphous polyester resin (2) may or may not contain a terephthalic acid component in its structure.

Examples of the other dicarboxylic acid (a3) that can be used to constitute the amorphous polyester resin (2) include orthophthalic acid, isophthalic acid, naphthalene dicarboxylic acid, diphenyl dicarboxylic acid, adipic acid, succinic acid, sebacic acid, azelaic acid, and alicyclic dicarboxylic acids such as cyclohexanedicarboxylic acid, cyclopropanedicarboxylic acid, and hexahydroterephthalic acid. The content of the other carboxylic acid (a3) is preferably 10 mol% or more and more preferably 20 mol% or more with respect to 100 mol% of all the dicarboxylic acid components in the amorphous polyester resin (2). In one embodiment, the other carboxylic acid (a3) is contained in a proportion of preferably 10 mol% to 50 mol% and more preferably 20 mol% to 40 mol% with respect to 100 mol% of all the dicarboxylic acid components in the amorphous polyester resin (2). When the content of the other carboxylic acid (a3) in the amorphous polyester resin (2) is in such a range, the resulting polyester cannot generate crystals and thus can be amorphous.

The amorphous polyester resin (2) may or may not contain an ethylene glycol component in its structure. The amorphous polyester resin (2) may contain, as a diol component, a diol (b3) other than ethylene glycol, such as trimethylene glycol, propylene glycol, tetramethylene glycol, neopentyl glycol, hexamethylene glycol, dodecamethylene glycol, cyclohexanedimethanol, hydroquinone, or 2,2-bis(4-$\beta$-hydroxyethoxyphenyl)propane. When copolymerization is caused using the other diol (b3), crystallization of the polyester is inhibited, thereby allowing the resulting polyester to be amorphous. The other diol (b3) is contained in a proportion of preferably 10 mol% or more and more preferably 20 mol% or more with respect to 100 mol% of the all the diol components in the amorphous polyester resin (2). In one embodiment, the other diol (b3) is contained in a proportion of preferably 10 mol% to 50 mol% and more preferably 20 mol% to 40 mol% with respect to 100 mol% of all the diol components in the amorphous polyester resin (2). When the content of the other diol (b3) in the amorphous polyester resin (2) is in such a range, the resulting polyester cannot generate crystals and thus can be amorphous.

The amorphous polyester resin (2) becomes rubbery owing to glass transition in a temperature range below 150°C. Accordingly, by using the crystalline polyester resin (3) in combination as the deflection temperature modifier (B), even when the above-described polyethylene terephthalate resin (A) has a melting point of 230° or higher and is in a crystallized state, the amorphous polyester resin (2) softens in a temperature range between 150°C and 220°C inclusive. As a result, the polyester resin composition containing the polyethylene terephthalate resin (A) and the temperature modifier (B) (the amorphous polyester resin (2)) can be softened. That is, in a temperature range of not higher than the melting point of the polyethylene terephthalate resin (A), the polyester resin composition can be softened to the extent that processing by forming is possible without melting the crystals therein.

Crystalline Polyester Resin (3)

The crystalline polyester resin (3) having a melting point in the temperature range of 150°C to 220°C and capable of serving as the deflection temperature modifier (B) (this may also be referred to simply as "crystalline polyester resin (3)" in the present specification) is a crystalline polyester composed of dicarboxylic acids and a diol.

In general, polyesters composed only of terephthalic acid and ethylene glycol, such as a polyethylene terephthalate resin, develop crystallinity. However, the melting points thereof are in a high temperature range of 230°C or higher. Accordingly, when the crystalline polyester resin (3) contains a dicarboxylic acid (a4) other than terephthalic acid as a structural unit, the crystallinity thereof is changed, whereby the melting point thereof can be changed. The crystalline polyester resin (3) may or may not contain a terephthalic acid unit in its structure.

Examples of the other dicarboxylic acid (a4) that can be used to constitute the crystalline polyester resin (3) include orthophthalic acid, isophthalic acid, naphthalene dicarboxylic acid, diphenyl dicarboxylic acid, adipic acid, succinic acid, sebacic acid, azelaic acid, and alicyclic dicarboxylic acids such as cyclohexanedicarboxylic acid, cyclopropanedicarboxylic acid, and hexahydroterephthalic acid. In the crystalline polyester resin (3), the other dicarboxylic acid (a4) is contained in a proportion of preferably 10 mol% or less, more preferably 5 mol% or less, and still more preferably 2 mol% or less, with respect to 100 mol% of all the dicarboxylic acid components in the crystalline polyester resin (3). In one embodiment, the other dicarboxylic acid (a4) is contained in a proportion of 0.1 mol% to 10 mol%, more preferably 0.2 mol% to 5 mol%, and still more preferably 0.5 mol% to 2 mol%, with respect to 100 mol% of all the dicarboxylic acid components in the crystalline polyester resin (3). When the content of the other dicarboxylic acid (a4) in the crystalline polyester resin (3) is in such a range, the polyester resin has a melting point in the above-described temperature range of 150°C to 220°C and thus can serve as a deflection temperature modifier (B) in the present invention.

In the crystalline polyester resin (3), by containing the other diol (b4) in addition to ethylene glycol as its component, the crystallinity of the crystalline polyester resin itself is changed, whereby the melting point thereof can be changed. Examples of the other diol (b4) include trimethylene glycol, propylene glycol, tetramethylene glycol, 1,4-butanediol, 3-alkoxy-1,2-propanediol, neopentyl glycol, hexamethylene glycol, dodecamethylene glycol, cyclohexanedimethanol, hydroquinone, and 2,2-bis(4-$\beta$-hydroxyethoxyphenyl)propane. The other diol (b4) is contained in a proportion of preferably 20 mol% or less, more preferably 18 mol% or less, and still more preferably 15 mol% or less, with respect to 100 mol% of the all the diol components in the crystalline polyester resin (3). In one embodiment, the other diol (b4) is contained in a proportion of 1 mol% to 20 mol%, more preferably 2 mol% to 18 mol%, and still more preferably 5 mol% to 15 mol%, with respect to 100 mol% of all the diol components in the crystalline polyester resin (3). When the content of the other diol (b4) in the crystalline polyester resin (3) is in such a range, the polyester resin has a melting point in the above-described temperature range of 150°C to 220°C and thus can serve as the deflection temperature modifier (B) in the present invention.

It is preferable to control the molecular weight of the crystalline polyester resin (3), thereby lowering the melting point of the crystalline polyester resin (3). From this viewpoint, the number-average molecular weight of the crystalline polyester resin (3) is preferably 5,000 to 50,000 and more preferably 7,500 to 45,000.

The melting point of the crystalline polyester resin (3) is preferably 150°C to 220°C and more preferably 170°C to 220°C. By using the crystalline polyester resin (3) having the melting point in such a range in combination as the deflection temperature modifier (B), even when the above-described polyethylene terephthalate resin (A) has a melting point of 230°C or higher and in a crystallized state, the crystalline polyester resin (3) turns to a molten state in a temperature range between 150°C and 220°C inclusive. As a result, the polyester resin composition containing the polyethylene terephthalate resin (A) and the deflection temperature modifier (B) (the crystalline polyester resin (3)) can be softened. That is, in a temperature range of not higher than the melting point of the polyethylene terephthalate resin (A), the polyester resin composition can be softened to the extent that processing by forming is possible without melting the crystals therein.

In the polyester resin composition of the present invention, the above-described deflection temperature modifier (B) preferably is the copolyester resin (1) (i.e., a copolyester resin containing: 80 mol% to 99 mol% of a terephthalic acid structural unit and 1 mol% to 20 mol% of an isophthalic acid structural unit; and an ethylene glycol structural unit) for the reason that the copolyester resin (1) provides a different softening temperature while it has the same type of molecular organization as the polyester resin composition and thus is highly compatible to the polyester resin composition.

The content of the above-described deflection temperature modifier (B) in the polyester resin composition of the present invention is preferably 5 parts by weight to 30 parts by weight and more preferably 10 parts by weight to 20 parts by weight with respect to 100 parts by weight of the polyethylene terephthalate resin (A). When the deflection temperature modifier (B) is contained at a proportion in such a range with respect to the polyethylene terephthalate resin (A), the resulting polyester resin composition has more excellent transparency and heat resistance and also has still more favorable formability.

Plasticizer

The polyester resin composition of the present invention may also contain a plasticizer. Examples of the plasticizer include acetylated monoglycerides, propylene glycol fatty acid esters, fatty acid triglycerides, and sorbitan fatty acid esters, as well as combinations thereof. The plasticizer is highly safe, and when mixed with the polyethylene terephthalate resin (A), it can enhance the molecular mobility especially at low temperatures, thereby accelerating supercooling, i.e., crystallization in a solid phase state. This enables crystallization at a still lower temperature, thereby allowing the resulting resin composition to have a finer crystal system.

From the viewpoint of improving the heat resistance, transparency, and formability of a formed body obtained using the polyester resin composition, the content of the plasticizer is preferably 1 part by weight to 5 parts by weight and more preferably 3 parts by weight to 5 parts by weight with respect to 100 parts by weight of the total weight of the polyethylene terephthalate resin (A) and the deflection temperature modifier (B).

Nucleating Agent

The polyester resin composition of the present invention may also contain a nucleating agent. Examples of the nucleating agent include inorganic nucleating agents and organic nucleating agents, as well as combinations thereof.

Examples of the inorganic nucleating agents include natural or synthetic silicate compounds, metal salts such as titanium oxide, barium sulfate, tricalcium phosphate, calcium carbonate, and sodium phosphate, kaolinite, halloysite, talc, smectite, vermiculite, mica, silica, calcium carbonate, magnesium carbonate, magnesium oxide, and magnesium sulfate. Examples of the organic nucleating agents include carboxylic acid amides, phenylphosphonic acid, and metal salts such as calcium benzoate, calcium oxalate, magnesium stearate, and zinc salicylate. From the viewpoint of improving the transparency of the resulting polyester resin composition, carboxylic acid amides are preferable as the nucleating agent. Examples of such carboxylic acid amides include ethylene bis fatty acid amides (e.g., ethylene bis stearic acid amide and ethylene bis oleic acid amide), alkylene bis fatty acid amides (e.g., propylene bis fatty acid amide and butylene bis fatty acid amide), and alkylene bis hydroxy fatty acid amides (e.g., alkylene bis hydroxystearic acid amides having an alkylene group having 1 to 6 carbon atoms, preferably ethylene bis 12-hydroxystearic acid amide).

From the viewpoint of improving the transparency of a formed body obtained using the polyester resin composition, the content of the nucleating agent is preferably 0.1 parts by weight to 1.0 parts by weight and more preferably 0.1 parts by weight to 0.5 parts by weight with respect to 100 parts by weight of the total weight of the polyethylene terephthalate resin (A) and the deflection temperature modifier (B).

Hydrolysis Inhibitor

The polyester resin composition of the present invention may also contain a hydrolysis inhibitor. Examples of the hydrolysis inhibitor include carbodiimide compounds such as polycarbodiimide compounds and monocarbodiimide compounds. Polycarbodiimide compounds are preferable from the viewpoint of improving the durability and the impact resistance of the resulting polyester resin composition, and monocarbodiimide compounds are preferable from the viewpoint of improving the durability and the formability (flowability) of the polyester resin composition. From the viewpoint of further improving the durability, impact resistance, and formability of a formed body obtained using the polyester resin composition, it is preferable to use a monocarbodiimide and a polycarbodiimide in combination.

Examples of the polycarbodiimide compounds include poly(4,4'-diphenylmethane carbodiimide), poly(4,4'-dicyclohexylmethane carbodiimide), poly(1,3,5-triisopropylbenzene)polycarbodiimide, and poly(1,3,5-triisopropylbenzene and 1,3-diisopropylbenzene)polycarbodiimide. Examples of the monocarbodiimide compounds include N,N'-di-2,6-diisopropylphenyl carbodiimide. Of the above-described hydrolysis inhibitors, poly(4,4'-dicyclohexylmethane carbodiimide) is commercially available from Nisshinbo Chemical Inc. under the trade name of, for example, CARBODILITE LA-1. Poly(1,3,5-triisopropylbenzene)polycarbodiimide and poly(1,3,5-triisopropylbenzene and 1,3-diisopropylbenzene)polycarbodiimide are commercially available from Rhein Chemie under the trade names of, for example, STABAXOL P and STABAXOL P-100, respectively. N, N'-di-2,6-diisopropylphenyl carbodiimide is commercially available from Rhein Chemie under the trade names of, for example, STABAXOL I.

From the viewpoint of improving the transparency and the formability of a formed body obtained using the polyester resin composition, the content of the hydrolysis inhibitor is preferably 0.05 parts by weight to 3 parts by weight and more preferably 0.10 parts by weight to 2 parts by weight with respect to 100 parts by weight of the total weight of the polyethylene terephthalate resin (A) and the deflection temperature modifier (B).

Other Additives

The polyester resin composition of the present invention may also contain other additives commonly used in resin forming. Examples of the other additives include fillers (e.g., inorganic fillers and organic fillers), flame retardants, antioxidants, lubricants such as hydrocarbon waxes and anionic surfactants, ultraviolet ray absorbers, antistatic agents, antifogging agents, photostabilizers, pigments, antifungal agents, antibacterial agents, foaming agents, colorants, and antifoaming agents. As the contents of the other additives, appropriate amounts can be selected by those skilled in the art to the extent that the effects of the present invention are not impaired.

Other Resins

The polyester resin composition of the present invention may also contain other resins to the extent that the effects of the present invention are not impaired. Examples of the other resins include, but not necessarily limited to, polyamide (PA), polyphenylene sulfide (PPS), a liquid crystal polymer (LCP), polytetrafluoroethylene (PTFE), fluororesin, aramid resin, polyetheretherketone (PEEK), polyetherketone (PEK), polyetherimide (PEI), thermoplastic polyimide, polyamideimide (PAI), polyetherketoneketone (PEKK), polyphenylene ethers (PPE), polyethersulfone (PES), polysulfone (PSU), polyallylate (PAR), polycarbonate (PC), polyoxymethylene (POM), polypropylene (PP), polyethylene (PE), polymethylpentene (TPX), polystyrene (PS), polymethyl methacrylate, an acrylonitrile-styrene copolymer (AS), and an acrylonitrile-butadiene-styrene copolymer (ABS). These thermoplastic resins can be blended in a molten state through melt kneading. Alternatively, for example, they may be once made into a fibrous form or a particulate form and then dispersed in the polyester resin composition of the present invention as one of the components of the composition. The other resins may also be thermosetting resins. Examples of the thermosetting resins include unsaturated polyester resins, urethane resins, urea resins, melanin resins, phenol resins, and epoxy resins. As the contents of the other resins, appropriate amounts can be selected by those skilled in the art to the extent that the effects of the present invention are not impaired.

In one embodiment, the polyester resin composition of the present invention has properties such that, when the polyester resin composition is in a crystallized state, it has a minimum tensile strength of 5 MPa or less, preferably not less than 0.8 MPa and not more than 3 MPa, in a temperature range of 150°C to 220°C. When the minimum tensile strength in this temperature range exceeds 5 MPa, the resulting polyester resin composition may not be deformed by the pressure applied by compressed air and forming of the polyester resin composition thus cannot be performed easily in some cases. When the minimum tensile strength is about 0.8 MPa or more, the resulting polyester resin composition can be deformed even by atmospheric pressure and thus can be used in vacuum forming and the like.

In one embodiment, the polyester resin composition of the present invention has properties such that, when the polyester resin composition is in a crystallized state, it has a tensile elongation of 50% or more, preferably not less than 100% and not more than 300%, in a temperature range of 150°C to 220°C. When the tensile elongation in this temperature range is less than 50%, the resulting polyester resin composition cannot be sufficiently stretched even if it is softened. This limits the depth of an article formed using the polyester resin composition, and the polyester resin composition thus is not suitable for processing by forming in some cases.

Conventionally, polyethylene terephthalate resins are crystalline resins. It has been difficult to thermally deform such crystalline resins to the extent that forming is possible unless they are heated to a temperature at which crystals start to melt, e.g., 230°C or higher.

In contrast, according to the polyester resin composition of the present invention containing the above-described polyethylene terephthalate resin (A) and deflection temperature modifier (B), even when the polyethylene terephthalate resin (A) is in a crystallized state, the polyester resin composition as a whole exhibits a tensile strength and a tensile elongation each satisfying the above-described range in a temperature range between 150°C and 220°C inclusive, and as a result, thermal deformation of the polyester resin composition can be performed easily even when the polyester resin composition is heated at a temperature equal to or lower than the melting point of the polyethylene terephthalate resin (A).

Method of Producing Polyester Resin Formed Body

In the production method of the present invention, as a first step, a supercooled sheet is produced by extruding a melt of a certain form of the above-described polyester resin from a die and then cooling and solidifying the melt to a temperature lower than the cooling glass transition temperature (Tg) of the polyester resin composition.

More specifically, the above-described first step is as follows, for example. Chips of the polyester resin composition of the present invention are sufficiently dried. Thereafter, the chips are melted and extruded from a die at a temperature that is, for example, 10°C to 80°C higher than the melting point of the polymer using an extruder. The molten resin is discharged from the die in the form of a sheet preferably using a flat mold, and is guided to cooling rolls or to a refrigerant such as water to cool and solidify the resin. As a result, a supercooled sheet is produced.

The die may be any of a straight-manifold type die, a fishtail die, a coat-hanger die, and the like.

The extruder used for extrusion from the die is not limited to particular types of extruder, and may be, for example, a single-screw extruder or a counter-rotating or co-rotating twin-screw extruder. The shape, dimensions, and the like of the screw can be selected as appropriate by those skilled in the art. Further, the number of revolutions and the discharge amount of the extruder to be used can be adjusted as appropriate by those skilled in the art according to the capacity or the like of the extruder.

The extrusion temperature is preferably 260°C to 300°C and more preferably 270°C to 290°C. An extrusion temperature lower than 260°C causes insufficient melting of the chips of the polyester resin composition, and this may result in failure in obtaining a uniform sheet. An extrusion temperature higher than 300°C may cause generation of oligomers, such as DEI (diethylisophthalate) and cyclic trimers of ethylene terephthalate, due to thermal decomposition or the like of the polyester, and this may result in contamination of the sheet.

The residence time in the extruder is preferably 3 minutes to 20 minutes and more preferably 5 minutes to 15 minutes. The residence time of less than 3 minutes may cause insufficient distribution mixing of the polyethylene terephthalate resin (A) and the deflection temperature modifier (B), resulting in deteriorated properties of the sheet. When the residence time in the molten state exceeds 20 minutes, transesterification may occur between the polyethylene terephthalate resin (A) and the deflection temperature modifier (B), and this may lower the impact resistance and the heat resistance of the sheet.

Preferably, three or more rolls are used as the cooling rolls. Such rolls preferably have a diameter of 300 mm to 600 mm.

The resulting supercooled sheet may be subjected to a heat treatment, drying, a surface treatment, and the like to the extent that the object of the present invention is not compromised. Further, the supercooled sheet may be multilayered using means known to those skilled in the art, when necessary. The thus-obtained supercooled sheet preferably has a thickness of 0.15 mm to 2.5 mm.

Subsequently, as a second step, a solid-phase crystallized sheet is produced by heating the supercooled sheet to a temperature between the extrapolated glass transition initiation temperature and the extrapolated glass transition end temperature of the polyester resin composition inclusive.

The extrapolated glass transition initiation temperature of the polyester resin composition is approximately 70°C to 80°C, and heating in the above-described second step is performed preferably for 5 to 10 minutes using a thermostat controlled at, e.g., 80°C.

Through such heating, the supercooled sheet obtained in the first step undergoes crystalline growth of amorphous molecules while maintaining a solid state, thereby turning into a solid-phase crystallized sheet.

Thereafter, as a third step, this solid-phase crystallized sheet is heated to a temperature between 150°C and 220°C inclusive and more preferably to a temperature between 170°C and 220°C inclusive, and then is shaped and cooled in a mold that is set at the temperature lower than the cooling glass transition temperature (Tg) of the polyester resin composition.

The heating in the third step is performed by, for example, between thermal heaters controlled at 400°C and disposed above and below the solid-phase crystallized sheet preferably for 10 to 20 seconds. Immediately after this heating, the solid-phase crystallized sheet is placed in a predetermined mold set at a temperature lower than the cooling glass transition temperature (Tg) of the polyester resin composition, and is then shaped and cooled.

For example, when the polyester resin composition of the present invention is used to produce a container having a predetermined shape, the shaping in the mold may be performed by vacuum forming, pressure forming, snap-back forming, reverse-draw forming, air-slip forming, plug-assist forming, hot plate forming, or a desired combination thereof. The drawing ratio (the depth to the frontage) of the formed article is preferably 0.1 to 1.5. This ensures a favorable volume and favorable formability of the resulting container.

For example, the polyester resin composition of the present invention may be used to produce a predetermined sheet or film as a primary processed product. As used in the present specification, the term "sheet" refers to a flat-plate-shaped sheet having a thickness of 0.1 mm or more, and the term "film" refers to a flat-plate-shaped film having a thickness of less than 0.1 mm. The primary processed product having such a sheet shape or a film shape can be prepared through extrusion molding or press forming of the polyester resin composition.

Examples

The present invention will be described specifically with reference to examples. It is to be noted, however, that the present invention is not limited to these examples by any means.

Test methods employed in each example and comparative example were as follows.

Evaluation of Crystallinity

7.5 mg of each sheet obtained was precisely weighed and sealed in an aluminum pan. Thereafter, using a differential scanning calorimeter (DSC) (Diamond DSC manufactured by PerkinElmer, Inc.), the 1st RUN was performed by raising the temperature from 20°C to 280°C at a temperature rise rate of 20°C/min, maintaining the temperature at 280°C for 5 minutes, then lowering the temperature from 280°C to 20°C at a temperature drop rate of -20°C/min, and maintaining the temperature at 20°C for 1 minute, and further, the 2nd RUN was performed by raising the temperature from 20°C to 280°C at a temperature rise rate of 20°C/min. The absolute value ΔHcc of the cold crystallization enthalpy of a polylactic acid resin observed in the 1st RUN and the crystal melting enthalpy ΔHm observed in the 2nd RUN were determined, and the relative crystallinity (%) was determined from the thus-obtained values as per the following equation.

$$\text{Relative Crystallinity (\%)} = \{(\Delta Hm - \Delta Hcc)/\Delta Hm\} \times 100$$

Example 1: Preparation of Resin Composition and Production of Sheet

90 moles (17.48 kg) of dimethyl terephthalate, 10 moles (1.94 kg) of dimethyl isophthalate, 200 moles (12.41 kg) of ethylene glycol, and as catalysts, zinc acetate and germanium dioxide (10 g each) were charged in a reactor equipped with stirring blades, a nitrogen inlet, and a decompression port. The resulting mixture was heated to 180°C in a nitrogen stream to cause transesterification, and methanol was removed through distillation. After 4 hours of distillation, approximately the theoretical amount of methanol was distilled off. Thereafter, the temperature was raised to 270°C and the pressure was gradually reduced to cause polymerization at 0.1 Torr to 0.3 Torr for 5 hours. Thus, a polymer was obtained.

As a result of $^1$H-NMR analysis of the obtained polymer, it was found that the polymer was a polyethylene terephthalate (EA1) in which 90 mol% of dicarboxylic acid residues were terephthalic acid units, 10 mol% of the dicarboxylic acid residues were isophthalic acid units, and 100 mol% of diol units were ethylene glycol units.

Subsequently, 10 parts by weight of this polyethylene terephthalate (EA1) (corresponding to the deflection temperature regulator (B)) and 100 parts by weight of polyethylene terephthalate (Far Eastern New Century Corporation, terephthalic acid units = 100 mol%; corresponding to the polyethylene terephthalate resin (A)) were charged in a twin-screw extrusion kneader and kneaded at a cylinder temperature of 240°C to 280°C. As a result, pellets made of the polyester resin composition were obtained. Thereafter, these pellets were fed to an extruder set at a cylinder temperature of 280°C. The pellets were melted and softened in the extruder, then discharged from a T-die, and cooled with rolls set at 60°C. As a result, a 0.3 mm thick sheet (ES1) was obtained.

The sheet (ES1) was allowed to stand in a thermostat at 90°C for 24 hours, thereby causing the component (A) in the sheet (ES1) to crystallize. The polyester resin composition constituting the sheet had a good appearance with no surface leaching or the like observed. The relative crystallinity of the polyester resin composition constituting the sheet (ES1) was measured using the DSC. The thus-measured relative crystallinity was 25%.

The sheet (ES1) was immersed in a thermostatic oil bath, and the change in the sheet with temperature was examined. As a result, no deformation or the like was observed even when the sheet was heated to 100°C. Further, the sheet (ES1) in the crystallized state was heated, and it was found that the sheet was deformable even in the presence of compressed air set to 5 MPa at 205°C. The tensile elongation at that time was 80%. The results obtained are shown in Table 1.

Example 2: Preparation of Resin Composition and Production of Sheet

A 0.3 mm thick sheet (ES2) was produced in the same manner as in Example 1, except that 10 parts by weight of polyethylene terephthalate (EA1) prepared in the same manner as in Example 1 (corresponding to the deflection temperature regulator (B)), 100 parts by weight of polyethylene terephthalate (Far Eastern New Century Corporation; terephthalic acid units = 100 mol%; corresponding to the polyethylene terephthalate resin (A)), and 0.1 parts by weight of calcium carbonate (nucleating agent) were charged in a twin-screw extrusion kneader.

The sheet (ES2) was allowed to stand in a thermostat at 75°C for 24 hours to cause crystallization. Thereafter, the relative crystallinity of the polyester resin composition constituting the sheet (ES2) was measured with the DSC. The thus-measured relative crystallinity was 25%.

The sheet (ES2) was immersed in a thermostatic oil bath, and the change in the sheet with temperature was examined. As a result, no deformation or the like was observed even when the sheet was heated to 100°C. Further, the sheet (ES2) in the crystallized state was heated, and it was found that the sheet was deformable even in the presence of compressed air set to 5 MPa at 205°C and the tensile elongation at that time was 80%. From these results, it can be seen that this sheet (ES2) had a minimum tensile strength of 5 MPa or less at 205°C and had a tensile elongation of 50% or more at this temperature where the tensile strength satisfied 5 MPa or less. The results obtained are shown in Table 1.

Example 3: Preparation of Resin Composition and Production of Sheet

A 0.3 mm thick sheet (ES3) was produced in the same manner as in Example 1, except that 5 parts by weight of polyethylene terephthalate (EA1) prepared in the same manner as in Example 1 (corresponding to the deflection temperature regulator (B)) and 100 parts by weight of polyethylene terephthalate (Far Eastern New Century Corporation; terephthalic acid units = 100 mol%; corresponding to the polyethylene terephthalate resin (A)) were charged in a twin-screw extrusion kneader.

Further, the sheet (ES3) was allowed to stand in a thermostat at 100°C for 24 hours to cause crystallization.

Thereafter, the relative crystallinity of the polyester resin composition constituting the sheet (ES3) was measured with the DSC. The thus-measured relative crystallinity was 30%.

The sheet (ES3) was immersed in a thermostatic oil bath, and the change in the sheet with temperature was examined. As a result, no deformation or the like was observed even when the sheet was heated to 100°C. Further, the sheet (ES3) in the crystallized state was heated, and it was found that the sheet was deformable even in the presence of compressed air set to 5 MPa at 215°C and the tensile elongation at that time was 55%. From these results, it can be seen that this sheet (ES3) had a minimum tensile strength of 5 MPa or less at 205°C and had a tensile elongation of 50% or more at this temperature where the tensile strength satisfied 5 MPa or less. The results obtained are shown in Table 1.

Example 4: Preparation of Resin Composition and Production of Sheet

A 0.3 mm thick sheet (ES4) was produced in the same manner as in Example 1, except that 20 parts by weight of polyethylene terephthalate (EA1) prepared in the same manner as in Example 1 (corresponding to the deflection temperature regulator (B)) and 100 parts by weight of polyethylene terephthalate (Far Eastern New Century Corporation; terephthalic acid units = 100 mol%; corresponding to the polyethylene terephthalate resin (A)) were charged in a twin-screw extrusion kneader.

The sheet (ES4) was allowed to stand in a thermostat at 80°C for 24 hours to cause crystallization. Thereafter, the relative crystallinity of the polyester resin composition constituting the sheet (ES4) was measured with the DSC. The thus-measured relative crystallinity was 14%.

The sheet (ES4) was immersed in a thermostatic oil bath, and the change in the sheet with temperature was examined. As a result, no deformation or the like was observed even when the sheet was heated to 100°C. Further, the sheet (ES4) in the crystallized state was heated, and it was found that the sheet was deformable even in the presence of compressed air set to 5 MPa at 165°C and the tensile elongation at that time was 200%. From these results, it can be seen that this sheet (ES4) had a minimum tensile strength of 5 MPa or less at 205°C and had a tensile elongation of 50% or more at this temperature where the tensile strength satisfied 5 MPa or less. The results obtained are shown in Table 1.

Example 5: Preparation of Resin Composition and Production of Sheet

A polymer was obtained in the same manner as in Example 1, except that 80 moles (15.54 kg) of dimethyl terephthalate, 20 moles (3.88 kg) of dimethyl isophthalate, 200 moles (12.41 kg) of ethylene glycol, and as catalysts, zinc acetate and germanium dioxide (10 g each) were charged in a reactor equipped with stirring blades, a nitrogen inlet, and a decompression port.

As a result of $^1$H-NMR analysis of the obtained polymer, it was found that the polymer was a polyester in which 80 mol% of dicarboxylic acid residues were terephthalic acid units, 20 mol% of the dicarboxylic acid residues were isophthalic acid units, and 100 mol% of the diol units were ethylene glycol units (this polyester is referred to as polyethylene terephthalate (EA5)).

Subsequently, a 0.3 mm thick sheet (ES5) was produced in the same manner as in Example 1, except that 20 parts by weight of this polyethylene terephthalate (EA5) (corresponding to the deflection temperature regulator (B)) and 100 parts by weight of polyethylene terephthalate (Far Eastern New Century Corporation; terephthalic acid units = 100 mol%; corresponding to the polyethylene terephthalate resin (A)) were charged in a twin-screw extrusion kneader.

Further, the sheet (ES5) was allowed to stand in a thermostat at 85°C for 24 hours to cause crystallization. Thereafter, the relative crystallinity of the polyester resin composition constituting the sheet (ES5) was measured with the DSC. The thus-measured relative crystallinity was 22%.

The sheet (ES5) was immersed in a thermostatic oil bath, and the change in the sheet with temperature was examined. As a result, no deformation or the like was observed even when the sheet was heated to 100°C. Further, the sheet (ES5) in the crystallized state was heated, and it was found that the sheet was deformable even in the presence of compressed air set to 5 MPa at 190°C and the tensile elongation at that time was 100%. From these results, it can be seen that this sheet (ES5) had a minimum tensile strength of 5 MPa or less at 205°C and had a tensile elongation of 50% or more at this temperature where the tensile strength satisfied 5 MPa or less. The results obtained are shown in Table 1.

Example 6: Preparation of Resin Composition and Production of Sheet

A 0.3 mm thick sheet (ES6) was produced in the same manner as in Example 1, except that 10 parts by weight of an amorphous polyester resin (Toyobo Co., Ltd., BYRON 270) (corresponding to the deflection temperature modifier (B)) was used instead of the polyethylene terephthalate (EA1) prepared in Example 1 and that this amorphous polyester resin and 100 parts by weight of polyethylene terephthalate (Far Eastern New Century Corporation; terephthalic acid units = 100 mol%; corresponding to the polyethylene terephthalate resin (A)) were charged in a twin-screw extrusion kneader.

Further, the sheet (ES6) was allowed to stand in a thermostat at 85°C for 24 hours to cause crystallization. Thereafter, the relative crystallinity of the polyester resin composition constituting the sheet (ES6) was measured with the DSC. The thus-measured relative crystallinity was 21%.

The sheet (ES6) was immersed in a thermostatic oil bath, and the change in the sheet with temperature was examined. As a result, no deformation or the like was observed even when the sheet was heated to 100°C. Further, the sheet (ES6) in the crystallized state was heated, and it was found that the sheet was deformable even in the presence of compressed air set to 5 MPa at 160°C and the tensile elongation at that time was 200%. From these results, it can be seen that this sheet (ES6) had a minimum tensile strength of 5 MPa or less at 205°C and had a tensile elongation of 50% or more at this temperature where the tensile strength satisfied 5 MPa or less. The results obtained are shown in Table 1.

Example 7: Preparation of Resin Composition and Production of Sheet

A 0.3 mm thick sheet (ES7) was produced in the same manner as in Example 1, except that 20 parts by weight of an amorphous polyester resin (Toyobo Co., Ltd., BYRON 270; glass transition temperature: 67°C) (corresponding to the deflection temperature modifier (B)) was used instead of the polyethylene terephthalate (EA1) prepared in Example 1 and that this amorphous polyester resin and 100 parts by weight of polyethylene terephthalate (Far Eastern New Century Corporation; terephthalic acid units = 100 mol%; corresponding to the polyethylene terephthalate resin (A)) were charged in a twin-screw extrusion kneader.

Further, the sheet (ES7) was allowed to stand in a thermostat at 85°C for 24 hours to cause crystallization. Thereafter, the relative crystallinity of the polyester resin composition constituting the sheet (ES7) was measured with the DSC. The thus-measured relative crystallinity was 20%.

The sheet (ES7) was immersed in a thermostatic oil bath, and the change in the sheet with temperature was examined. As a result, no deformation or the like was observed even when the sheet was heated to 100°C. Further, the sheet (ES7) in the crystallized state was heated, and it was found that the sheet was deformable even in the presence of compressed air set to 5 MPa at 170°C and the tensile elongation at that time was 80%. From these results, it can be seen that this sheet (ES7) had a minimum tensile strength of 5 MPa or less at 205°C and had a tensile elongation of 50% or more at this temperature where the tensile strength satisfied 5 MPa or less. The results obtained are shown in Table 1.

Example 8: Preparation of Resin Composition and Production of Sheet

A 0.3 mm thick sheet (ES8) was produced in the same manner as in Example 1, except that 10 parts by weight of a crystalline polyester resin (Toyobo Co., Ltd., BYRON GM-925; melting point: 166°C) (corresponding to the deflection temperature modifier (B)) was used instead of the polyethylene terephthalate (EA1) prepared in Example 1 and that this crystalline polyester resin and 100 parts by weight of polyethylene terephthalate (Far Eastern New Century Corporation; terephthalic acid units = 100 mol%; corresponding to the polyethylene terephthalate resin (A)) were charged in a twin-screw extrusion kneader.

Further, the sheet (ES8) was allowed to stand in a thermostat at 75°C for 24 hours to cause crystallization. Thereafter, the relative crystallinity of the polyester resin composition constituting the sheet (ES8) was measured with the DSC. The thus-measured relative crystallinity was 27%.

The sheet (ES8) was immersed in a thermostatic oil bath, and the change in the sheet with temperature was examined. As a result, no deformation or the like was observed even when the sheet was heated to 100°C. Further, the sheet (ES8) in the crystallized state was heated, and it was found that the sheet was deformable even in the presence of compressed air set to 5 MPa at 190°C and the tensile elongation at that time was 110%. From these results, it can be seen that this sheet (ES8) had a minimum tensile strength of 5 MPa or less at 205°C and had a tensile elongation of 50% or more at this temperature where the tensile strength satisfied 5 MPa or less. The results obtained are shown in Table 1.

Example 9: Preparation of Resin Composition and Production of Sheet

A 0.3 mm thick sheet (ES9) was produced in the same manner as in Example 1, except that 10 parts by weight of a crystalline polyester resin (Toyobo Co., Ltd., BYRON SI-173) (corresponding to the deflection temperature modifier (B)) was used instead of the polyethylene terephthalate (EA1) prepared in Example 1 and that this crystalline polyester resin and 100 parts by weight of polyethylene terephthalate (Far Eastern New Century Corporation; terephthalic acid units = 100 mol%; corresponding to the polyethylene terephthalate resin (A)) were charged in a twin-screw extrusion kneader.

Further, the sheet (ES9) was allowed to stand in a thermostat at 75°C for 24 hours to cause crystallization. Thereafter, the relative crystallinity of the polyester resin composition constituting the sheet (ES9) was measured with the DSC. The thus-measured relative crystallinity was 29%.

The sheet (ES9) was immersed in a thermostatic oil bath, and the change in the sheet with temperature was examined. As a result, no deformation or the like was observed even when the sheet was heated to 100°C. Further, the sheet (ES9) in the crystallized state was heated, and it was found that the sheet was deformable even in the presence of compressed air set to 5 MPa at 200°C and the tensile elongation at that time was 110%. From these results, it can be seen that this sheet (ES9) had a minimum tensile strength of 5 MPa or less at 205°C and had a tensile elongation of 50% or more at this temperature where the tensile strength satisfied 5 MPa or less. The results obtained are shown in Table 1.

Example 10: Preparation of Resin Composition and Production of Sheet

A 0.3 mm thick sheet (ES10) was produced in the same manner as in Example 1, except that 15 parts by weight of a crystalline polyester resin (DIC Corporation, POLYCIZER A55; melting point: 200°C to 215°C) (corresponding to the deflection temperature modifier (B)) was used instead of the polyethylene terephthalate (EA1) prepared in Example 1 and that this crystalline polyester resin and 100 parts by weight of polyethylene terephthalate (Far Eastern New Century Corporation; terephthalic acid units = 100 mol%; corresponding to the polyethylene terephthalate resin (A)) were charged in a twin-screw extrusion kneader.

The $^1$H-NMR spectrum of the above-described crystalline polyester resin was compared with the $^1$H-NMR spectrum of polyethylene terephthalate composed of phthalic acid (dicarboxylic acid component) and ethylene glycol (diol component) (hereinafter, this polyethylene terephthalate is referred to as "standard PET"). The comparison showed that the peak area of hydrogen constituting the ethylene glycol in the spectrum of the crystalline polyester resin was not the same as the peak area of the hydrogen in the spectrum of the standard PET. This demonstrates that the above-described crystalline polyester resin contained a diol component derived from a diol other than ethylene glycol.

Further, the sheet (ES10) was allowed to stand in a thermostat at 70°C for 24 hours to cause crystallization. Thereafter, the relative crystallinity of the polyester resin composition constituting the sheet (ES10) was measured with the DSC. The thus-measured relative crystallinity was 30%.

The sheet (ES10) was immersed in a thermostatic oil bath, and the change in the sheet with temperature was examined. As a result, no deformation or the like was observed even when the sheet was heated to 100°C. Further, the sheet (ES10) in the crystallized state was heated, and it was found that the sheet was deformable even in the presence of compressed air set to 5 MPa at 210°C and the tensile elongation at that time was 100%. From these results, it can be seen that this sheet (ES10) had a minimum tensile strength of 5 MPa or less at 205°C and had a tensile elongation of 50% or more at this temperature where the tensile strength satisfied 5 MPa or less. The results obtained are shown in Table 1.

Example 11: Preparation of Resin Composition and Production of Sheet

Polyethylene terephthalate (EA1) was prepared in the same manner as in Example 1.

On the other hand, 95 moles (18.45 kg) of dimethyl terephthalate, 5 moles (0.97 kg) of dimethyl isophthalate, 200 moles (12.41 kg) of ethylene glycol, and as catalysts, zinc acetate and germanium dioxide (10 g each) were charged in a reactor equipped with stirring blades, a nitrogen inlet, and a decompression port. The resulting mixture was heated to 180°C in a nitrogen stream to cause transesterification, and methanol was removed through distillation. After 4 hours of distillation, approximately the theoretical amount of methanol was distilled off. Thereafter, the temperature was raised to 270°C and the pressure was gradually reduced to cause polymerization at 0.1 Torr to 0.3 Torr for 5 hours. Thus, a polymer was obtained. As a result of $^1$H-NMR analysis of the obtained polymer, it was found that the polymer was a polyester in which 95 mol% of dicarboxylic acid residues were terephthalic acid units, 5 mol% of the dicarboxylic acid residues were isophthalic acid units, and 100 mol% of the diol units were ethylene glycol units (this polyester is referred to as polyethylene terephthalate (EA11)).

A 0.3 mm thick sheet (ES11) was produced in the same manner as in Example 1, except that 10 parts by weight of the thus-obtained polyethylene terephthalate (EA1) (corresponding to the deflection temperature modifier (B)) and polyethylene terephthalate (EA11) (corresponding to the polyethylene terephthalate resin (A)) were charged in a twin-screw extrusion kneader.

Further, the sheet (ES11) was allowed to stand in a thermostat at 85°C for 24 hours to cause crystallization. Thereafter, the relative crystallinity of the polyester resin composition constituting the sheet (ES11) was measured with the DSC. The thus-measured relative crystallinity was 23%.

The sheet (ES11) was immersed in a thermostatic oil bath, and the change in the sheet with temperature was examined. As a result, no deformation or the like was observed even when the sheet was heated to 100°C. Further, the sheet (ES11) in the crystallized state was heated, and it was found that the sheet was deformable even in the presence of compressed air set to 5 MPa at 190°C and the tensile elongation at that time was 100%. From these results, it can be seen that this sheet (ES11) had a minimum tensile strength of 5 MPa or less at 205°C and had a tensile elongation of 50% or more at this temperature where the tensile strength satisfied 5 MPa or less. The results obtained are shown in Table 1.

Example 12: Preparation of Resin Composition and Production of Sheet

A 0.3 mm thick sheet (ES12) was produced in the same manner as in Example 1, except that 10 parts by weight of polyethylene terephthalate (EA1) prepared in the same manner as in Example 1 (corresponding to the deflection temperature regulator (B)), 100 parts by weight of polyethylene terephthalate (Far Eastern New Century Corporation; terephthalic acid units = 100 mol%; corresponding to the polyethylene terephthalate resin (A)), and 2 parts by weight of acetylated monoglyceride (plasticizer) (Riken Vitamin Co., Ltd., RIKEMAL PL-004) were charged in a twin-screw extrusion kneader.
Further, the sheet (ES12) was allowed to stand in a thermostat at 85°C for 24 hours to cause crystallization. The sheet (ES12) had a good appearance with no surface leaching or the like and had a haze value of 3.5%. The haze value was measured with a haze meter in a manner that complies with "Plastics-Determination of Haze of Transparent Materials" in JIS K 7136. Thereafter, the relative crystallinity of the polyester resin composition constituting the sheet (ES12) was measured with the DSC. The thus-measured relative crystallinity was 22%.
The sheet (ES12) was immersed in a thermostatic oil bath, and the change in the sheet with temperature was examined. As a result, no deformation or the like was observed even when the sheet was heated to 100°C. Further, the sheet (ES12) in the crystallized state was heated, and it was found that the sheet was deformable even in the presence of compressed air set to 5 MPa at 190°C and the tensile elongation at that time was 120%. From these results, it can be seen that this sheet (ES12) had a minimum tensile strength of 5 MPa or less at 205°C and had a tensile elongation of 50% or more at this temperature where the tensile strength satisfied 5 MPa or less. The results obtained are shown in Table 1.

Example 13: Preparation of Resin Composition and Production of Sheet

A 0.3 mm thick sheet (ES13) was produced in the same manner as in Example 1, except that 10 parts by weight of polyethylene terephthalate (EA1) prepared in the same manner as in Example 1 (corresponding to the deflection temperature regulator (B)), 100 parts by weight of polyethylene terephthalate (Far Eastern New Century Corporation; terephthalic acid units = 100 mol%; corresponding to the polyethylene terephthalate resin (A)), and 2 parts by weight of propylene glycol fatty acid ester (plasticizer) (Riken Vitamin Co., Ltd., RIKEMAL PL-100) were charged in a twin-screw extrusion kneader.
Further, the sheet (ES13) was allowed to stand in a thermostat at 75°C for 24 hours to cause crystallization. The sheet (ES12) had a good appearance with no surface leaching or the like and had a haze value of 3.5%. Thereafter, the relative crystallinity of the polyester resin composition constituting the sheet (ES13) was measured with the DSC. The thus-measured relative crystallinity was 23%.
The sheet (ES13) was immersed in a thermostatic oil bath, and the change in the sheet with temperature was examined. As a result, no deformation or the like was observed even when the sheet was heated to 100°C. Further, the sheet (ES13) in the crystallized state was heated, and it was found that the sheet was deformable even in the presence of compressed air set to 5 MPa at 190°C and the tensile elongation at that time was 130%. From these results, it can be seen that this sheet (ES13) had a minimum tensile strength of 5 MPa or less at 205°C and had a tensile elongation of 50% or more at this temperature where the tensile strength satisfied 5 MPa or less. The results obtained are shown in Table 1.

Example 14: Preparation of Resin Composition and Production of Sheet

A 0.3 mm thick sheet (ES14) was produced in the same manner as in Example 1, except that 10 parts by weight of polyethylene terephthalate (EA1) prepared in the same manner as in Example 1 (corresponding to the deflection temperature regulator (B)), 100 parts by weight of polyethylene terephthalate (Far Eastern New Century Corporation; terephthalic acid units = 100 mol%; corresponding to the polyethylene terephthalate resin (A)), and 2 parts by weight of fatty acid triglyceride (plasticizer) (Riken Vitamin Co., Ltd., Actor M1) were charged in a twin-screw extrusion kneader.
Further, the sheet (ES14) was allowed to stand in a thermostat at 75°C for 24 hours to cause crystallization. The sheet (ES14) had a good appearance with no surface leaching or the like, and had a haze value of 3.5%. Thereafter, the relative crystallinity of the polyester resin composition constituting the sheet (ES14) was measured with the DSC. The thus-measured relative crystallinity was 21%.

The sheet (ES14) was immersed in a thermostatic oil bath, and the change in the sheet with temperature was examined. As a result, no deformation or the like was observed even when the sheet was heated to 100°C. Further, the sheet (ES13) in the crystallized state was heated, and it was found that the sheet was deformable even in the presence of compressed air set to 5 MPa at 190°C and the tensile elongation at that time was 125%. From these results, it can be seen that this sheet (ES13) had a minimum tensile strength of 5 MPa or less at 205°C and had a tensile elongation of 50% or more at this temperature where the tensile strength satisfied 5 MPa or less. The results obtained are shown in Table 1.

Comparative Example 1: Preparation of Resin Composition and Production of Sheet

Polyethylene terephthalate (Far Eastern New Century Corporation, terephthalic acid units = 100 mol%) was charged in a twin-screw extrusion kneader and kneaded at a cylinder temperature of 240°C to 280°C. Thus, pellets made of a polyester resin composition composed only of the polyethylene terephthalate resin (A) were obtained.

Subsequently, the pellets were fed to an extruder set at a cylinder temperature of 280°C. The pellets were melted and softened in the extruder, then discharged from a T-die, and cooled with rolls set at 60°C. Thus, a 0.3 mm thick sheet (CS1) was obtained.

Further, the sheet (CS1) was allowed to stand in a thermostat at 135°C for 24 hours to cause crystallization. Thereafter, the relative crystallinity of the polyester resin composition constituting the sheet (CS1) was measured with the DSC. The thus-measured relative crystallinity was 35%.

The sheet (CS1) was immersed in a thermostatic oil bath, and the change in the sheet with temperature was examined. As a result, no deformation or the like was observed even when the sheet was heated to 100°C. Further, the sheet (CS1) in the crystallized state was heated, and it was found that the sheet could not be deformed even in the presence of compressed air set to 5 MPa at 230°C. After the polyethylene terephthalate started to melt above 250°C, the tensile strength dropped rapidly, and the tensile elongation was not measurable because the sheet deformed under its own weight owing to the drawdown caused by the melting. That is, the polyester resin composition constituting this sheet (CS1) did not satisfy the condition that the minimum tensile strength in the crystallized state was 5 MPa or less and the tensile elongation was 50% or more at the temperature where the tensile strength satisfied 5 MPa or less. The results obtained are shown in Table 1.

Comparative Example 2: Preparation of Resin Composition and Production of Sheet

A 0.3 mm thick sheet (CS2) was produced in the same manner as in Example 1, except that 3 parts by weight of polyethylene terephthalate (EA1) prepared in the same manner as in Example 1 and 100 parts by weight of polyethylene terephthalate (Far Eastern New Century Corporation; terephthalic acid units = 100 mol%) were charged in a twin-screw extrusion kneader.

Further, the sheet (CS2) was allowed to stand in a thermostat at 90°C for 24 hours to cause crystallization. The sheet (CS2) had a good appearance with no surface leaching or the like. Thereafter, the relative crystallinity of the polyester resin composition constituting the sheet (CS2) was measured with the DSC. The thus-measured relative crystallinity was 29%.

The sheet (CS2) was immersed in a thermostatic oil bath, and the change in the sheet with temperature was examined. As a result, no deformation or the like was observed even when the sheet was heated to 100°C. Further, the sheet (CS2) in the crystallized state was heated, and it was found that the sheet could not be deformed even in the presence of compressed air set to 5 MPa at 230°C. After the polyethylene terephthalate started to melt above 250°C, the tensile strength dropped rapidly, and the tensile elongation was not measurable because the sheet deformed under its own weight owing to the drawdown caused by the melting. That is, the polyester resin composition constituting this sheet (CS2) did not satisfy the condition that the minimum tensile strength in the crystallized state was 5 MPa or less and the tensile elongation was 50% or more at the temperature where the tensile strength satisfied 5 MPa or less. The results obtained are shown in Table 1.

Comparative Example 3: Preparation of Resin Composition and Production of Sheet

A 0.3 mm thick sheet (CS3) was produced in the same manner as in Example 1, except that 35 parts by weight of polyethylene terephthalate (EA1) prepared in the same manner as in Example 1 and 100 parts by weight of polyethylene terephthalate (Far Eastern New Century Corporation; terephthalic acid units = 100 mol%) were charged in a twin-screw extrusion kneader.

Further, the sheet (CS3) was allowed to stand in a thermostat at 80°C for 24 hours to cause crystallization.

The sheet (CS3) had a good appearance with no surface leaching or the like. Thereafter, the relative crystallinity of the polyester resin composition constituting the sheet (CS3) was measured with the DSC. The thus-measured relative crystallinity was 8%.

The sheet (CS3) was immersed in a thermostatic oil bath, and the change in the sheet with temperature was examined. As a result, a certain degree of deformation was observed when the sheet was heated to 100°C. The sheet (CS3) in the crystallized state was heated, and it was found that the temperature at which the sheet (CS3) was deformable even with compressed air set to 5 MPa was 125°C. The results obtained are shown in Table 1.

Comparative Example 4: Preparation of Resin Composition and Production of Sheet

70 moles (13.60 kg) of dimethyl terephthalate, 30 moles (5.82 kg) of dimethyl isophthalate, 200 moles (12.41 kg) of ethylene glycol, and as catalysts, zinc acetate and germanium dioxide (10 g each) were charged in a reactor equipped with stirring blades, a nitrogen inlet, and a decompression port. The resulting mixture was heated to 180°C in a nitrogen stream to cause transesterification, and methanol was removed through distillation. After 4 hours of distillation, approximately the theoretical amount of methanol was distilled off. Thereafter, the temperature was raised to 270°C and the pressure was gradually reduced to cause polymerization at 0.1 Torr to 0.3 Torr for 5 hours. Thus, a polymer was obtained.

As a result of $^1$H-NMR analysis of the obtained polymer, it was found that the polymer was a polyester in which 70 mol% of dicarboxylic acid residues were terephthalic acid units, 30 mol% of the dicarboxylic acid residues were isophthalic acid units, and 100 mol% of diol units were ethylene glycol units (this polyester is referred to as polyethylene terephthalate (CA4)).

Subsequently, a 0.3 mm thick sheet (CS4) was produced in the same manner as in Example 1, except that 20 parts by weight of this polyethylene terephthalate (CA4) and 100 parts by weight of polyethylene terephthalate (Far Eastern New Century Corporation; terephthalic acid units = 100 mol%) were charged in a twin-screw extrusion kneader.

Further, the sheet (CS4) was allowed to stand in a thermostat at 90°C for 24 hours to cause crystallization. The sheet (CS4) had a good appearance with no surface leaching or the like. Thereafter, the relative crystallinity of the polyester resin composition constituting the sheet (CS4) was measured with the DSC. The thus-measured relative crystallinity was 8%.

The sheet (CS4) was immersed in a thermostatic oil bath, and the change in the sheet with temperature was examined. As a result, a certain degree of deformation was observed when the sheet was heated to 100°C. The sheet (CS4) in this crystallized state was heated, and it was found that the temperature at which the sheet (CS4) was deformable even with compressed air set to 5 MPa was 135°C. The results obtained are shown in Table 1.

[Table 1]

| | Polyester Resin Composition | | | | | | | | Polyester Molded Body | | |
| | Polyethylene Terephthalate Resin (A) | | Deflection Temperature Modifier (B) | | Nucleating Agent | | Plasticizer | | Relative Crystallinity (%) | Deformation under 100 °C | Conditions of Minimum Tensile Strength and Tensile |
| | Type | Parts by Weight | Type | Parts by Weight | Type | Parts by Weight | Type | Parts by Weight | | | |
|---|---|---|---|---|---|---|---|---|---|---|---|
| Example 1 | Commercial PET | 100 | PET(EA1) | 10 | | | | | 25 | Not Observed | Satisfied |
| Example 2 | Commercial PET | 100 | PET(EA1) | 10 | Calcium Carbonate | 0.1 | | | 25 | Not Observed | Satisfied |
| Example 3 | Commercial PET | 100 | PET(EA1) | 5 | | | | | 30 | Not Observed | Satisfied |
| Example 4 | Commercial PET | 100 | PET(EA1) | 20 | | | | | 14 | Not Observed | Satisfied |
| Example 5 | Commercial PET | 100 | PET(EA5) | 20 | | | | | 22 | Not Observed | Satisfied |
| Example 6 | Commercial PET | 100 | Amorphous (BYRON 270) | 10 | | | | | 21 | Not Observed | Satisfied |
| Example 7 | Commercial PET | 100 | Amorphous (BYRON 270) | 20 | | | | | 20 | Not Observed | Satisfied |
| Example 8 | Commercial PET | 100 | Crystalline (BYRON GM-925) | 10 | | | | | 27 | Not Observed | Satisfied |
| Example 9 | Commercial PET | 100 | Crystalline (BYRON SI-173) | 10 | | | | | 29 | Not Observed | Satisfied |
| Example 10 | Commercial PET | 100 | Crystalline (POLYCIZER A55) | 15 | | | | | 30 | Not Observed | Satisfied |
| Example 11 | PET(EA11) | 100 | PET(EA1) | 10 | | | | | 23 | Not Observed | Satisfied |

(continued)

| | Polyester Resin Composition | | | | | | | | Polyester Molded Body | | |
|---|---|---|---|---|---|---|---|---|---|---|---|
| | Polyethylene Terephthalate Resin (A) | | Deflection Temperature Modifier (B) | | Nucleating Agent | | Plasticizer | | Relative Crystallinity (%) | Deformation under 100 °C | Conditions of Minimum Tensile Strength and Tensile |
| | Type | Parts by Weight | Type | Parts by Weight | Type | Parts by Weight | Type | Parts by Weight | | | |
| Example 12 | Commercial PET | 100 | PET(EA1) | 10 | | | AM | 2 | 22 | Not Observed | Satisfied |
| Example 13 | Commercial PET | 100 | PET(EA1) | 10 | | | PGE | 2 | 23 | Not Observed | Satisfied |
| Example 14 | Commercial PET | 100 | PET(EA1) | 10 | | | TR | 2 | 21 | Not Observed | Satisfied |
| Comparative Example 1 | Commercial PET | 100 | | | | | | | 35 | Not Observed | Not Satisfied |
| Comparative Example 2 | Commercial PET | 100 | PET(EA1) | 3 | | | | | 29 | Not Observed | Not Satisfied |
| Comparative Example 3 | Commercial PET | 100 | PET(EA1) | 35 | | | | | 8 | Observed | Not Satisfied |

(continued)

| | Polyester Resin Composition | | | | | | | | Polyester Molded Body | | |
|---|---|---|---|---|---|---|---|---|---|---|---|
| | Polyethylene Terephthalate Resin (A) | | Deflection Temperature Modifier (B) | | Nucleating Agent | | Plasticizer | | Relative Crystallinity (%) | Deformation under 100 °C | Conditions of Minimum Tensile Strength and Tensile |
| | Type | Parts by Weight | Type | Parts by Weight | Type | Parts by Weight | Type | Parts by Weight | | | |
| Comparative Example 4 | Commercial PET | 100 | PET(CA4) | 20 | | | | | 8 | Observed | Not Satisfied |

Comercial PET: Far Eastern New Century Corporation, Terephthalic Acid Units = 100 mol% PET(EA1): PET in which 90 mol% of dicarboxylic acid residues are terephthalic acid units, 10 mol% are isophthalic acid units, and 100 mol% of diol units are ethylene glycol units.

PET(EA5): PET in which 95 mol% of dicarboxylic acid residues are terephthalic acid units, 20 mol% are isophthalic acid units, and 100 mol% of diol units are ethylene glycol units.

PET(EA11): PET in which 95 mol% of dicarboxylic acid residues are terephthalic acid units, 5 mol% are isophthalic acid units, and 100 mol% of diol units are ethylene glycol units.

PET(CA4): PET in which 70 mol% of dicarboxylic acid residues are terephthalic acid units, 30 mol% are isophthalic acid units, and 100 mol% of diol units are ethylene glycol units.

Conditions of Minimum Tensile Strength and Tensile Elongation: The minimum tensile strength at 205 °C is 5 MPa or less, and the tensile elongation at a temperature at which this tensile strength satisfies 5 MPa or less is 50% or more.

AM: Acetylated Monoglyceride PGE: Propylene Glycol Fatty Acid Ester TR: Fatty Acid Triglyceride

As can be seen from Table 1, the polyester resin compositions obtained in Examples 1 to 14 were superior in formability and heat resistance to the polyester resin compositions obtained in Comparative Examples 1 to 4.

Example 15: Production of Container

Using the sheet-shaped crystallized polyester resin composition obtained in Example 2, a container (150 mm in width, 100 mm in length, 40 mm in depth, and about 600 ml in volume) was produced by vacuum pressure forming. The conditions for the vacuum pressure forming were as follows: the crystallized polyester resin composition was softened by heating it to a temperature of 205°C and then molded with a mold left at room temperature, thereby obtaining a container-shaped formed body of the polyester resin. This polyester resin formed body had a good appearance with no surface leaching or the like, favorable formability, high transparency, and a haze value of 4.3%. The crystallinity measured using the DSC was 35.6%. Water was poured into this container-shaped polyester resin formed body and heated in a microwave oven at 1500 W for 2 minutes. As a result, no change in the shape of the container caused by the heating was observed.

Example 16: Production of Container

Using the sheet-shaped polyester resin composition obtained in Example 12, a container (150 mm in width, 100 mm in length, 40 mm in depth, and about 600 ml in volume) was produced by vacuum pressure forming. The conditions for the vacuum pressure forming were as follows: the polyester resin composition was softened by heating it to a temperature of 190°C and then molded with a mold heated to 60°C, thereby obtaining a container-shaped formed body of the polyester resin. This polyester resin formed body had a good appearance with no surface leaching or the like, favorable formability, very high transparency, and a haze value of 4.5%. The degree of crystallinity as measured using the DSC was 34.9%. Water was poured into this container-shaped polylactic acid resin formed body and heated in a microwave oven at 1500 W for 2 minutes. As a result, any change in shape or deformation of the container caused by the heating was not observed.

Industrial Applicability

The present invention is applicable to various uses where heat resistance is desired, including, for example, use as a material for forming microwavable containers for foods. Accordingly, the present invention is useful in the fields of resin forming, foods, and the like.

**Claims**

1. A polyester resin composition comprising:

   a polyethylene terephthalate resin (A); and
   a deflection temperature modifier (B),
   wherein the polyethylene terephthalate resin (A) is crystallizable, and when the polyethylene terephthalate resin is in a crystallized state, the polyester resin composition has a minimum tensile strength of 5 MPa or less in a temperature range of 150°C to 220°C, and has a tensile elongation of 50% or more in this temperature range.

2. The polyester resin composition according to claim 1, wherein, when the polyethylene terephthalate resin (A) is in a crystallized state, the polyethylene terephthalate resin (A) contained in the polyester resin composition has a crystallinity of 10% or more as measured with a differential scanning calorimeter.

3. The polyester resin composition according to claim 1 or 2, wherein the deflection temperature modifier (B) is a copolyester resin containing: 80 mol% to 99 mol% of a terephthalic acid structural unit and 1 mol% to 20 mol% of an isophthalic acid structural unit; and an ethylene glycol structural unit.

4. The polyester resin composition according to claim 1 or 2, wherein the deflection temperature modifier (B) is an amorphous polyester resin.

5. The polyester resin composition according to claim 1 or 2, wherein the deflection temperature modifier (B) is a crystalline polyester resin having a melting point in a temperature range of 150°C to 220°C.

6. The polyester resin composition according to any one of claims 1 to 5, wherein the polyethylene terephthalate resin (A) is a copolyester resin containing: 90 mol% to 99 mol% of a terephthalic acid structural unit and 1 mol% to 10 mol% of an isophthalic acid structural unit; and an ethylene glycol structural unit.

7. The polyester resin composition according to any one of claims 1 to 6, wherein a content of the deflection temperature modifier (B) is 5 parts by weight to 30 parts by weight with respect to 100 parts by weight of the polyethylene terephthalate resin (A).

8. The polyester resin composition according to any one of claims 1 to 7, further comprising at least one plasticizer selected from the group consisting of acetylated monoglycerides, propylene glycol fatty acid esters, fatty acid triglycerides, and sorbitan fatty acid esters.

9. A method of producing a polyester resin formed body, which comproses:

(1) obtaining a supercooled sheet by extruding a melt of the polyester resin composition according to any one of claims 1 to 8 from a die and cooling the melt to a temperature lower than a cooling glass transition temperature (Tg) of the polyester resin composition;
(2) obtaining a solid-phase crystallized sheet by heating the supercooled sheet to a temperature between an extrapolated glass transition initiation temperature and an extrapolated glass transition end temperature of the polyester resin composition inclusive; and
(3) heating the solid-phase crystallized sheet to a temperature from 150°C to 220°C and then shaping and cooling the solid-phase crystallized sheet in a mold set at a temperature lower than the cooling glass transition temperature (Tg) of the polyester resin composition.

## INTERNATIONAL SEARCH REPORT

| International application No. |
| --- |
| PCT/JP2020/028770 |

**A. CLASSIFICATION OF SUBJECT MATTER**
C08K 5/103(2006.01)i; C08L 67/02(2006.01)i
FI: C08L67/02; C08K5/103

According to International Patent Classification (IPC) or to both national classification and IPC

**B. FIELDS SEARCHED**

Minimum documentation searched (classification system followed by classification symbols)
C08K5/103; C08L67/02

Documentation searched other than minimum documentation to the extent that such documents are included in the fields searched
Published examined utility model applications of Japan        1922–1996
Published unexamined utility model applications of Japan      1971–2020
Registered utility model specifications of Japan              1996–2020
Published registered utility model applications of Japan      1994–2020

Electronic data base consulted during the international search (name of data base and, where practicable, search terms used)
JSTPlus (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X | JP 3-162926 A (MITSUI SEKIYU KAGAKU KOGYO KABUSHIKI KAISHA) 12.07.1991 (1991-07-12) claims, page 3, upper left column, examples 5, 9 | 1-7 |
| Y | claims, page 3, upper left column, examples 5, 9 | 8 |
| A | | 9 |
| X | JP 2-187449 A (MITSUI SEKIYU KAGAKU KOGYO KABUSHIKI KAISHA) 23.07.1990 (1990-07-23) claims, page 4, lower right column to page 5, upper left column, examples 1-3 | 1-7 |
| Y | claims, page 4, lower right column to page 5, | 8 |
| A | upper left column, examples 1-3 | 9 |
| X | JP 5-163372 A (MITSUI SEKIYU KAGAKU KOGYO KABUSHIKI KAISHA) 29.06.1993 (1993-06-29) claims, paragraphs [0020]-[0021], examples | 1-7 |
| Y | claims, paragraphs [0020]-[0021], examples | 8 |
| A | | 9 |

☒ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 02 September 2020 (02.09.2020) | 15 September 2020 (15.09.2020) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

International application No.

PCT/JP2020/028770

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2007-524741 A (E.I. DU PONT DE NEMOURS AND COMPANY) 30.08.2007 (2007-08-30) paragraph [0050] | 8<br>1-7, 9 |
| A | JP 11-106526 A (UNITIKA LTD.) 20.04.1999 (1999-04-20) entire text | 1-9 |
| A | JP 11-255880 A (NIPPON-ESTER CO., LTD.) 21.09.1999 (1999-09-21) entire text | 1-9 |

Form PCT/ISA/210 (continuation of second sheet) (January 2015)

**INTERNATIONAL SEARCH REPORT**
Information on patent family members

| International application No. |
|---|
| PCT/JP2020/028770 |

| Patent Documents referred in the Report | Publication Date | Patent Family | Publication Date |
|---|---|---|---|
| JP 3-162926 A | 12 Jul. 1991 | US 5556675 A<br>claims, column 12,<br>examples 33, 37<br>EP 415728 A2<br>claims, p. 9,<br>examples 33, 37 | |
| JP 2-187449 A | 23 Jul. 1990 | (Family: none) | |
| JP 5-163372 A | 29 Jun. 1993 | (Family: none) | |
| JP 2007-524741 A | 30 Aug. 2007 | US 2005/0171250 A1<br>paragraph [0049]<br>CN 1934160 A<br>pp. 26-27<br>EP 2184308 A2<br>paragraph [0042] | |
| JP 11-106526 A | 20 Apr. 1999 | (Family: none) | |
| JP 11-255880 A | 21 Sep. 1999 | (Family: none) | |

Form PCT/ISA/210 (patent family annex) (January 2015)

**EP 4 019 579 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005194331 A
- JP 4614044 B
- JP 2012245700 A
- JP 5105459 B